**Europäisches Patentamt**

**European Patent Office**

**Office européen des brevets**

(19)

(11) Veröffentlichungsnummer: **0 049 774**
**B2**

(12)

# NEUE EUROPÄISCHE PATENTSCHRIFT

(45) Veröffentlichungstag der neuen Patentschrift:
21.06.89

(21) Anmeldenummer: 81107337.8

(22) Anmeldetag: 17.09.81

(51) Int. Cl.⁴: **B 60 T 15/04**

(54) **Motorwagen-Bremsventil.**

(30) Priorität: 11.10.80 DE 3048486

(43) Veröffentlichungstag der Anmeldung:
21.04.82 Patentblatt 82/16

(45) Bekanntmachung des Hinweises auf die Patenterteilung:
31.10.84 Patentblatt 84/44

(45) Bekanntmachung des Hinweises auf die Entscheidung
über den Einspruch:
21.06.89 Patentblatt 89/25

(84) Benannte Vertragsstaaten:
AT CH DE FR GB IT LI NL SE

(56) Entgegenhaltungen:
DE-A-2 706 757
DE-A-2 724 179
DE-A-2 851 290
DE-A-2 913 847
SE-A-445 725

KNORR-BREMSE MB 1000-K-12, Motorwagen
Bremsventil MB Ausgabe 1969

(73) Patentinhaber: WABCO Westinghouse
Fahrzeugbremsen GmbH, Am Lindener Hafen 21
Postfach 91 12 80, D-3000 Hannover 91 (DE)

(72) Erfinder: **Kolmitz, Willi**, Kleine Breite 5, D-3256
Coppenbrügge (DE)
Erfinder: **Homann, Peter**, Am Waldrand 5, D-3057
Neustadt 2 (DE)
Erfinder: **Schniggenfittich, Manfred**, Ossietzkyring
31a, D-3000 Hannover 91 (DE)
Erfinder: **Warendorf, Gerhard**, Mellendorferstrasse
19A, D-3012 Wedemark 2 (DE)

(74) Vertreter: **Schrödter, Manfred**, WABCO
Westinghouse Fahrzeugbremsen GmbH Am
Lindener Hafen 21 Postfach 91 12 80, D-3000
Hannover 91 (DE)

EP 0 049 774 B2

## Beschreibung

Die Erfindung betrifft ein Motorwagen-Bremsventil gemäß dem Oberbegriff des Patentanspruchs 1.

Ein derartiges Motorwagen-Bremsventil ist in der SE-A-445 725 beschrieben und dargestellt.

Bei diesem Motorwagen-Bremsventil weist der mit der Trittplatte verbundene Bereich des Stößels zur Aufnahme eines Sicherungsbolzens eine Lagerstelle auf. Unterhalb der Lagerstelle ist eine in Umfangsrichtung verlaufende Nut vorgesehen, die zur Befestigung eines Faltenbalges dient.

Der Stößel dieses Bremsventils weist also eine relativ komplizierte Form auf. Da er aus einem Stück besteht, ist eine entsprechend aufwendige Herstellung bzw. Bearbeitung erforderlich.

Da die erwähnte Herstellungsweise relativ kostenintensiv ist, liegt der Erfindung die Aufgabe zugrunde, einen Stößel der eingangs genannten Art zu schaffen, der einfacher und kostengünstiger gefertigt werden kann.

Diese Aufgabe wird mit der im Patentanspruch 1 angegebenen Erfindung gelöst. Vorteilhafte Ausgestaltungen und Weiterbildungen der Erfindung sind in den Unteransprüchen angegeben.

Der erfindungsgemäße Stößel bietet neben einfacher und kostengünstiger Herstellbarkeit noch den besonderen Vorteil, daß dar mit dem Führungsteil verbundene und aus Kunststoff bestehende Teil des Stößels mit Stößelteilen unterschiedlicher Größe kombiniert werden kann, so daß dieser Stößel in verschiedenen Motorwagen-Bremsventilen einsetzbar ist. Bei dem erfindungsgemäßen Stößel kann in vorteilhafter Weise eine Funktionsteilung dergestalt vorgenommen werden, daß das Kunststoffteil die eine komplizierte Form erfordernde Führungs- bzw. Haltefunktion und das Metallteil die Kraftübertragung übernimmt. Durch die Verwendung eines Kunststoffteiles ist es darüber hinaus möglich, in vorteilhafter Weise weitere Teile des Bremsventils (z. B. Faltenbalg für Schmutzschutz) am Kunststoffteil zu befestigen. In all diesen Fällen weist das Metallteil des Stößels eine ausgesprochen einfache und somit kostengünstig herzustellende Gestaltung auf.

Anhand eines Ausführungsbeispiels wird die Erfindung nachstehend näher erläutert.

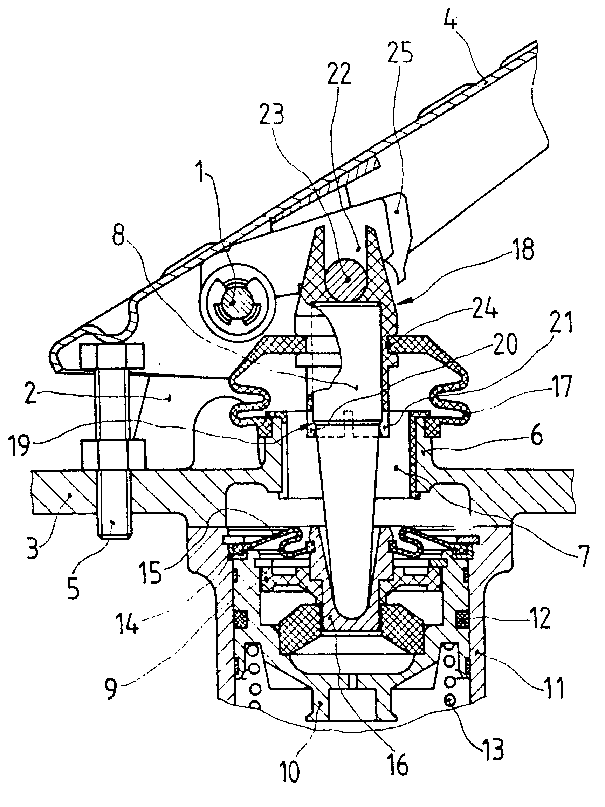

Die Abbildung zeigt im Schnitt ein Motorwagen-Bremsventil mit dem erfindungsgemäßen geteilten Stößel.

Auf einer Welle 1 eines Lagerbockes 2, der Bestandteil einer Grundplatte 3 ist, ist eine Trittplatte 4 in Richtung auf die Grundplatte 3 zu drehbar gelagert. Der Hub der Trittplatte 4 ist mittels eines in die Grundplatte 3 eingeschraubten Gewindebolzens 5 einstellbar. Eine mit einem zylindrischen Ansatz 6 versehene, die Grundplatte 3 durchdringende Bohrung 7 dient als Durchlaß für einen Metallteil 8 eines Stößels zur Betätigung eines elastischen Übertragungselementes 9, welches auf einen Abstufungskolben 10 einwirkt. Der Abstufungskolben 10 wird gegen die Kraft einer Druckfeder 13 verschoben und wirkt mit Ventilelementen zusammen, die hier nicht dargestellt sind.

Die Beschreibung dieser Ventilelemente ist zum Verständnis der Erfindung nicht erforderlich.

Der Abstufungskolben 10 wird in einem mit der Grundplatte 3 fest verbundenen Ventilgehäuse 11 geführt. Ein Dichtring 12, der in einer Umfangsnut des Abstufungskolbens 10 gelagert ist, verhindert, daß zwischen der Ventilgehäusewand und der Wandung des Abstufungskolbens 10 Druckmittel austritt. Oberhalb des Abstufungskolbens 10 ist in der Wand des Ventilgehäuses 11 ein ringförmiges Halteelement 14 befestigt, welches einerseits als Anschlag für den Abstufungskolben 10 und andererseits als Halterung für den äußeren Rand einer faltenbalgartigen Wand 15 dient. Der innere Rand dieser Wand 15 ist an einem Einsatz 16 des elastischen Übertragungselementes 9 befestigt.

Ein Faltenbalg 17 ist einerseits am zylindrischen Ansatz 6 der Grundplatte 3 und andererseits an einem aus Kunststoff gefertigten Teil 18 des Stößels befestigt. Der Faltenbalg 17 hat die Aufgabe, das Eindringen von Schmutz und Feuchtigkeit in das Ventilgehäuse 11 zu verhindern. Das als Spritzteil gefertigte Teil 18 des Stößels besteht aus einem im wesentlichen zylindrischen abgestuften Kunststoffkörper, der in seinem oberen Bereich konisch ausgebildet ist. In Richtung seiner Längsachse ist im unteren Bereich eine zylindrische Öffnung vorgesehen. An ihrem Ausgang weist die Wandung der zylindrischen Öffnung einen umlaufenden Vorsprung 19 auf, die mit einer Abstufung des Teiles 8 eine Schnappverbindung bildet. Um den Einrastvorgang zu erleichtern, sind in der Wandung der zylindrischen Öffnung vier Längsschlitze 20, 21 vorgesehen.

Im konisch geformten Teil 18 des Stößels ist in Richtung der Längsachse ein Schlitz 22 vorgesehen, der sich von der Oberkante des konischen Teils 18 bis zur zylindrischen Öffnung des Teiles 18 erstreckt. Der Schlitz 22 dient zur Führung und Sicherung eines an der Trittplatte 4 angeordneten Bolzens 23, der von einem mit der Trittplatte 4 verbundenen Betätigungselement 25 gehalten wird und mittels welchem die auf die Trittplatte 4 ausgeübte Betätigungskraft auf den Teil 8 des Stößels übertragen wird. In der Wandung des Teiles 18 ist in Umfangsrichtung eine Nut 24 vorgesehen, in welcher der Rand des im vorstehenden, bereits genannten Faltenbalges 17 befestigt ist.

Der Teil 8 des Stößels ist in seinem oberen Bereich zylindrisch ausgebildet, wobei das zylindrische Teil den Abmessungen der zylindrischen Öffnung des Teiles 18 des Stößels entspricht.

Der untere Bereich des Teils 8 ist kegelförmig ausgebildet. Dieses kegelförmige Teil steht in Wirkverbindung mit dem Einsatz 16 des elastischen Übertragungselementes 9, wobei der Einsatz 16 eine Ausnehmung besitzt, die im wesentlichen der Kegelform des Teiles 8 entspricht.

Die Verbindung zwischen dem Teil 18 und dem Teil 8 des Stößels kann - wie schon gesagt - als Schnappverbindung ausgebildet sein. Denkbar sind auch Preß- und Schraubverbindungen.

**Patentansprüche**

1. Motorwagen-Bremsventil für die Steuerung von druckmittelbetätigten Betriebsbremsanlagen in Motorfahrzeugen, das folgende Merkmale umfaßt:

a) Zur Betätigung des Bremsventils ist eine mit einem Stößel direkt verbundene Trittplatte (4) oder ein mit einem Stößel über ein Gestänge verbundenes Bremspedal vorgesehen;

b) der Stößel ist mit seinem einen Ende mit einem die Steuerung der Betriebsbremse auslösenden Abstufungskolben (10) verbunden;

c) der mit dem Abstufungskolben (10) verbundene Teil des Stößels besteht aus Metall;

d) der Stößel ist an seinem anderen Ende mit einer schlitzförmigen Ausnehmung (22) zur Aufnahme eines an der Trittplatte (4) oder an dem Gestänge befestigten Führungsteils (23) versehen, gekennzeichnet durch folgende Merkmale:

e) Der Stößel ist zweiteilig ausgebildet, wobei der eine Teil (8) des Stößels mit dem Abstufungskolben (10) und der andere Teil (18) des Stößels mit dem Führungsteil (23) verbunden ist;

f) der mit dem Führungsteil (23) verbundene Teil (18) des Stößels besteht aus Kunststoff;

g) der aus Kunststoff bestehende Teil (18) des Stößels ist so ausgebildet, daß das Führungsteil (23) bei Betätigung des Bremsventils (Trittplatte) an dem mit dem Abstufungskolben (10) verbundenen Teil (8) des Stößels anliegt.

2. Motorwagen-Bremsventil nach Anspruch 1, gekennzeichnet durch folgende Merkmale:

a) Der mit dem Abstufungskolben (10) verbundene Teil (8) des Stößels ist mit einem Absatz oder einem Vorsprung versehen;

b) der mit dem Führungsteil (23) verbundene Teil (18) des Stößels ist an dem dem anderen Teil (8) des Stößels zugewandten Ende mit federnden Vorsprüngen (19) versehen, so daß diese mit dem Absatz oder dem Vorsprung des den Absatz aufweisenden Teiles (8) des Stößels eine Schnappverbindung bilden.

3. Motorwagen-Bremsventil nach wenigstens einem der vorhergehenden Ansprüche, dadurch gekennzeichnet, daß der aus Kunststoff bestehende Teil (18) des Stößels eine Nut (24) oder einen Vorsprung zur Befestigung eines Faltenbalgs (17) für den Schmutzschutz des Bremsventils aufweist.

4. Motorwagen-Bremsventil nach Anspruch 1, dadurch gekennzeichnet, daß der mit dem Führungsteil (23) in Verbindung stehende Teil (18) des Stößels einen Schlitz (22) zur Aufnahme des Führungsteils (23) aufweist, wobei die Länge des Schlitzes (22) dem Hub der Trittplatte entspricht.

**Claims**

1. Motor vehicle brake valve for controlling pressure medium-actuated service brake installations in motor vehicles, comprising the following features:

a) a foot-plate (4) connected directly to a push rod or a brake pedal connected to a push rod via a linkage is provided for actuating the brake valve;

b) the push rod is connected at one end to a graduating piston (10) that triggers the control of the service brake;

c) the part (8) of the push rod connected to the graduating piston (10) consists of metal;

d) the push rod is provided at its other end with a slot-shaped recess (22) for accommodating a guide member (23) fastened to the foot-plate (4) or to the linkage; characterised by the following features

e) the push rod is constructed in two parts, one part (8) of the push rod being connected to the graduating piston (10) and the other part (18) of the push rod being connected to the guide member (23);

f) the part (18) of the push rod connected to the guide member (23) consists of plastics material;

g) the part (18) of the push rod consisting of plastics material is so constructed that when the brake valve (foot-plate) is actuated, the guide member (23) abuts against the part (8) of the push rod connected to the graduating piston (10).

2. Motor vehicle brake valve according to claim 1,
characterised by the following features:

a) the part (8) of the push rod connected to the graduating piston (10) is provided with a shoulder or a projection; and

b) the part (18) of the push rod connected to the guide member (23) is provided at the end facing the other part (8) of the push rod with resilient projections (19) so that the latter form a snap connection with the shoulder or projection of the part (8) of the push rod having the shoulder.

3. Motor vehicle brake valve according to at least one of the preceding claims, characterised in that the part (18) of the push rod consisting of plastics material has a groove (24) or a projection for fastening a bellows (17) for protecting the brake valve from dirt.

4. Motor vehicle brake valve according to claim 1, characterised in that the part (18) of the push rod connected to the guide member (23) has a slot (22) for accommodating the guide member (23), the length of the slot (22) corresponding to the travel of the foot-plate.

**Revendications**

1. Robinet de frein pour véhicule automobile, pour la commande d'installations de freinage principales commandées par un fluide sous pression dans les véhicules automobiles, qui présente les particularités suivantes:

a)    pour l'actionnement du robinet de frein, il est prévu une pédale (4) reliée directement à un poussoir, ou une pédale de frein reliée à un poussoir par l'intermédiaire d'une tringlerie;

b)    le poussoir est relié par l'une de ses extrémités à un piston étagé (10) qui déclenche la commande du frein principal;

c)    la partie du poussoir reliée au piston étagé (10) est en métal;

d)    le poussoir est muni à son autre extrémité d'un évidement (22) en forme de fente destiné à recevoir une partie de guidage (23) fixée à la pédale (4) ou à la tringlerie, caractérisé en ce que

e)    le poussoir est réalisé en deux parties, l'une (8) des parties du poussoir étant reliée au piston étagé (10) et l'autre partie (18) du poussoir étant reliée à la partie de guidage (23);

f)    la partie (18) du poussoir qui est reliée à la partie de guidage (23) est réalisée en matière plastique;

g)    la partie (18) du poussoir en matière plastique est conformée de manière que la partie de guidage s'applique à la partie de poussoir (8) reliée au piston étagé (10) à l'actionnement du robinet de frein (pédale).

2. Robinet de frein pour véhicule automobile selon la revendication 1, caractérisé en ce que
a)    la partie (8) du poussoir qui est reliée au piston étagé (10) est munie d'un épaulement ou d'une saillie;
b)    la partie (18) du poussoir qui est reliée à la partie de guidage (23) est munie de saillies élastiques (19) à l'extrémité qui est dirigée vers l'autre partie (8) du poussoir, de sorte que ces saillies forment une liaison à encliquetage avec l'épaulement où la saillie de la partie (8) du poussoir qui présente l'épaulement.

3. Robinet de frein de véhicule automobile selon au moins une des revendications précédentes, caractérisé en ce que la partie (18) du poussoir qui est faite de matière plastique présente une gorge (24) ou une saillie pour la fixation d'un soufflet (17) servant à la protection du robinet de frein contre les salissures.

4. Robinet de frein de véhicule automobile selon la revendication 1, caractérisé en ce que la partie du poussoir (18) qui est en liaison avec la partie de guidage (23) présente une fente (22) pour la réception de la partie de guidage (23), la longueur de la fente (22) correspondant à la course de la pédale.